(19) Europäisches Patentamt
European Patent Office
Office européen des brevets

(11) **EP 3 958 452 B1**

(12) **EUROPEAN PATENT SPECIFICATION**

(45) Date of publication and mention
of the grant of the patent:
**25.10.2023   Bulletin 2023/43**

(51) International Patent Classification (IPC):
**H02M 1/32** (2007.01)     **H02M 1/36** (2007.01)
**H02M 7/487** (2007.01)     **H02M 7/483** (2007.01)

(21) Application number: **21192336.2**

(52) Cooperative Patent Classification (CPC):
**H02M 1/32; H02M 1/36; H02M 7/4833; H02M 7/487**

(22) Date of filing: **20.08.2021**

(54) **NEUTRAL-POINT-CLAMPED THREE-LEVEL CIRCUIT AND CONTROL METHOD**

NEUTRALPUNKTGEKLEMMTE DREISTUFENSCHALTUNG UND STEUERUNGSVERFAHREN

CIRCUIT À TROIS NIVEAUX VERROUILLÉ AU POINT NEUTRE ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2020   CN 202010848293**

(43) Date of publication of application:
**23.02.2022   Bulletin 2022/08**

(73) Proprietor: **Delta Electronics (Shanghai) Co., Ltd.
Shanghai 201209 (CN)**

(72) Inventors:
 • **WEI, Qikang**
   **Pudong , Shanghai, 201209 (CN)**
 • **XU, Feidong**
   **Pudong , Shanghai, 201209 (CN)**
 • **ZHU, Xuancai**
   **Pudong , Shanghai, 201209 (CN)**
 • **ZHENG, Weiyi**
   **Pudong , Shanghai, 201209 (CN)**

(74) Representative: **2K Patentanwälte Blasberg
Kewitz & Reichel
Partnerschaft mbB
Schumannstrasse 27
60325 Frankfurt am Main (DE)**

(56) References cited:
   **CN-A- 111 478 609      CN-B- 104 518 697**

 • **GAO XUN ET AL: "A Switch Partial Turned OFF
   Cycle by Cycle Current Limiting Method for
   3L-NPC Half-Bridge Inverters", IEEE ACCESS,
   IEEE, USA, vol. 8, 16 January 2020 (2020-01-16),
   pages 15632-15639, XP011768496, DOI:
   10.1109/ACCESS.2020.2967152 [retrieved on
   2020-01-24]**

**Description**

**TECHNICAL FIELD**

The present application relates to the field of power electronics technology, and in particular to a neutral-point-clamped three-level circuit and a control method.

**BACKGROUND**

High-power multi-level inverters have been widely used in industrial production in recent years, especially three-level inverter.

For most neutral-point-clamped three-level inverters, which only takes into consideration a control strategy ensuring that the outer switch is turned off followed by the inner switch, and the difference between the turn-off time of the inner and outer switches is generally a few microseconds. However, after the neutral-point-clamped three-level circuit is turned off, the freewheeling oscillation is formed due to the inductance and capacitance in the circuit, which causes the problem that the voltage withstanding by the switch in the circuit exceeds the normal working voltage and even reaches twice and more than that of the normal working voltage. The existing solution is generally a replacement with a switch having a higher withstand voltage. Therefore, the withstand voltage of the inner switch is generally higher than the outer switch to ensure that the inner switch will not be damaged due to uneven voltage distribution.

However, according to the prior art, it is impossible to solve the problem of uneven voltage distribution between the inner and outer switches after the neutral-point-clamped three-level circuit is shut down.

CN 104518697B relates to a current limiting control method and device for a three-level inverter. The device includes a current limiting control unit, an auxiliary switch tube opening unit and a main switch tube opening unit.

**SUMMARY**

The present application provides a neutral-point-clamped three-level circuit and a control method to solve the problem of uneven maximum voltage distribution of the inner and outer switches during the freewheeling oscillation process after the neutral-point-clamped three-level circuit is shut down. The invention is set out in the appended set of claims.

In a first aspect, the present application provides a control method as set forth in claim 1.

In a second aspect, the present application provides a neutral-point-clamped three-level circuit as set forth in claim 8.

**BRIEF** DESCRIPTION OF DRAWINGS

In order to more clearly describe the technical solutions in the present application or the prior art, the drawings that need to be used in the description of the embodiments or prior art will be briefly introduced in the following. Obviously, the drawings in the following description are some embodiments of the present application, and for those of ordinary skill in the art, other drawings can be obtained based on these drawings without creative efforts.

FIG 1 is a schematic diagram of a neutral-point-clamped three-level circuit according to an embodiment of the present application;

FIG 2a- FIG 2c are circuit analysis diagrams in which uneven voltage distribution between inner and outer switches is incurred since an output current of a neutral-point-clamped three-level circuit in the prior art participates in resonance;

FIG 3 is a diagram of voltage and current waveforms in various stages of freewheeling oscillation after the neutral-point-clamped three-level circuit in the prior art is shut down;

FIG 4 is a schematic diagram of a system structure of a neutral-point-clamped three-level circuit according to an embodiment of the present application;

FIG 5 is a schematic flowchart of a control method of a neutral-point-clamped three-level circuit according to an embodiment of the present application;

FIG 6 is a schematic diagram of driving waveforms of the neutral-point-clamped three-level circuit during a normal operation according to an embodiment of the present application;

FIG 7 is a schematic diagram of current freewheeling when the modulation wave is in a positive half wave after the neutral-point-clamped three-level circuit is shut down according to an embodiment of the present application;

FIG 8 is a diagram of voltage and current waveforms at various stages of freewheeling oscillation after the neutral-point-clamped three-level circuit is shut down according to an embodiment of the present application;

FIG 9 is a schematic structural diagram of an electronic device provided by the present application.

## DETAILED DESCRIPTION OF THE EMBODIMENTS

In order to make the purposes, technical solutions and advantages of the embodiments of the present application clearer, the technical solutions in the embodiments of the present application will be clearly and comprehensively described in the following with reference to the drawings in the embodiments of the present application.

The terms "first", "second", "third", "fourth", etc. (if any) in the description, claims and the above-mentioned drawings of the present application are used to distinguish similar objects, but not necessarily to describe a specific order or sequence. It should be understood that the data used in this way is interchangeable under appropriate circumstances, so that the embodiments of the present application described herein, for example, can be implemented in a sequence other than those illustrated or described herein. In addition, the terms "include" and "have" and any variations of them are intended to cover non-exclusive inclusions. For example, processes, methods, systems, products or devices that include a series of steps or units are not necessarily limited to steps or units that are clearly listed and may include other steps or units that are not clearly listed or are inherent to these processes, methods, products, or devices.

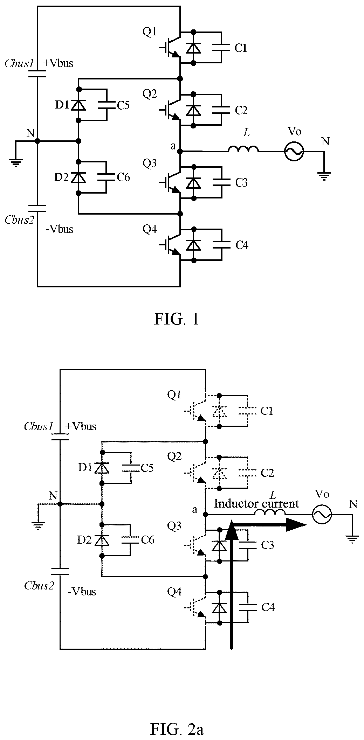

The neutral-point-clamped three-level circuit has been widely used in the field of power electronics. For example, it can be used as an inverter to convert direct current into alternating current. In other embodiments, the neutral-point-clamped three-level circuit can also be used as a DC-DC converter which converts direct current into direct current, and this case is not limited thereto. FIG 1 is a schematic diagram of a neutral-point-clamped three-level circuit according to an embodiment of the present application. As shown in FIG 1, the neutral-point-clamped three-level circuit includes a bridge arm circuit. The bridge arm circuit is divided into an upper bridge arm and a lower bridge arm. The upper bridge arm includes a first switch Q1 and a second switch Q2. The lower bridge arm includes a third switch Q3 and a fourth switch Q4. The neutral-point-clamped three-level circuit further includes a first capacitor Cbus1 and a second capacitor Cbus2. The first switch Q1 is connected to a first terminal of the first capacitor Cbus1, and the fourth switch Q4 is connected to a second terminal of the second capacitor Cbus2. The neutral-point-clamped three-level circuit further includes a first diode D1 and a second diode D2. A cathode of the first diode D1 is connected to a middle-point between the first switch Q1 and the second switch Q2, and a anode of the second diode D2 is connected to a middle-point between the third switch Q3 and the fourth switch Q4, and a anode of the first diode D1 and a cathode of the second diode D2 are connected to a middle-point between the first capacitor Cbus1 and the second capacitor Cbus2, i.e. the neutral point N, where the first switch Q1 and the fourth switch Q4 are generally termed as outer switches, and the second switch Q2 and the third switch Q3 are termed as inner switches. The first capacitor Cbus1 and the second capacitor Cbus2 respectively bear a DC bus voltage Vbus. Generally, a potential of the neutral point N is defined as zero, that is, N is the zero potential point. A potential of the first terminal of the first capacitor Cbus1 is +Vbus, and a potential of the second terminal of the second capacitor Cbus2 is -Vbus, that is, a bus voltage between the upper and lower ends of the circuit is 2Vbus. In some embodiments, the neutral-point-clamped three-level circuit can be used as an inverter, and a middle-point between the second switch Q2 and the third switch Q3 is connected to a power grid through an inductor L to realize conversion of direct current of the first and second capacitors into alternating current.

Wherein, in this case, the neutral-point-clamped three-level circuit is used as a single-phase inverter in FIG 1. In other embodiments, it can also be used in a three-phase inverter, for example, including three bridge arms as shown in FIG 1, the middle-point of each bridge arm is connected to a phase of a three-phase power grid through an inductor. In other embodiments, the neutral-point-clamped three-level circuit shown in FIG 1 can also be used as a part of the DC converter.

When the inverter is in a normal operation, the maximum voltage that each switch bears is Vbus, and the switches cannot bear the DC bus voltage of 2 Vbus. In generally, when the inverter stops working due to a fault, since components in the hardware circuit present different parasitic parameters, the inner switches and the outer switches may have different actual turn-off times. When the outer switches are turned off before the inner switches, due to the clamped diode D1 or D2, the maximum voltage that the outer switch Q1 or Q4 bears is Vbus, which is half of the DC bus voltage, and when the inner switches are turned off before the outer switches, it is possible that the inner switch Q2 or Q3 bears the entire DC bus voltage, that is, 2Vbus, thereby causing damage to the switch. Therefore, when shutting down the inverter, it is necessary to ensure the operating principle that the outer switches are turned off before the inner switches. Generally, the existing control technology is to control the inner switches to be turned off after the outer switches with a delay of about a few microseconds at most.

However, even if the four switches Q1-Q4 of the inverter are normally turned off in the above-mentioned manner, due to the presence of the inductor L, the first capacitor Cbus1 and the second capacitor Cbus2 in the circuit, there will be a freewheeling oscillation process in the circuit, that is, the current of the inductor L will first gradually drop to zero, and then reverse, resonate with parasitic capacitors of the four switches and the clamped diodes. During the whole process, there will be uneven voltage distribution between the inner and outer switches. In severe cases, the maximum voltage of the inner switch will exceed the withstand voltage of the inner switch, which will result in damage to the inner switch.

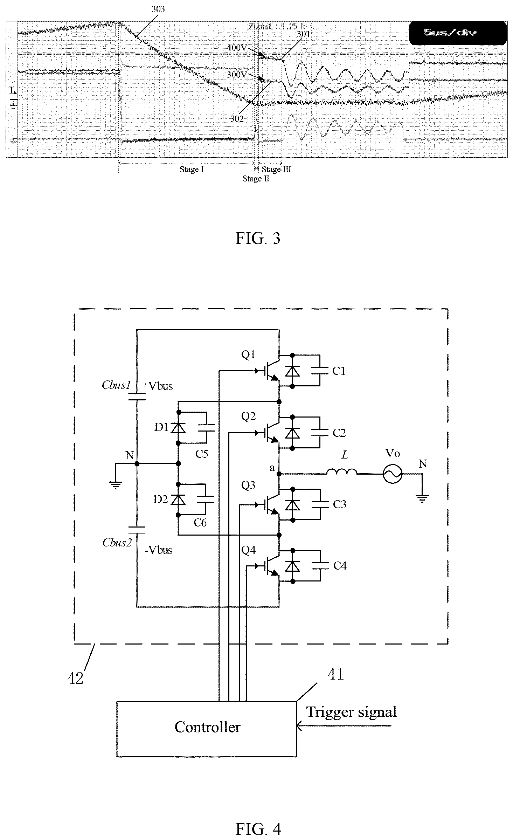

Referring to FIG 2a-FIG 2c and FIG 3, which describes how the uneven voltage distribution of the inner and outer transistors after all switches are turned off caused in the prior art. Description is made by taking an example where the modulation wave is greater than 0.

FIG 2a-FIG 2c are circuit analysis diagrams in which uneven voltage distribution between inner and outer switches is incurred since an output current of a neutral-point-clamped three-level circuit in the prior art participates in resonance, where the components marked by the dotted lines indicate that the components are in off state at this stage. FIG 3 is a voltage and current waveforms in various stages of freewheeling oscillation after he neutral-point-clamped three-level circuit in the prior art is shut down. As shown in FIG 2a, when the modulation wave is greater than 0, the inverter needs to be shut down urgently due to a fault, after the controller controls all switches Q1-Q4 to be turned off, that is, the turn-off principle is that the outer switches are turned off before the inner switches, a inductor current (the output current of the bridge arm) at this time is freewheeling through the anti-parallel diodes of the third switch Q3 and the fourth switch Q4 of the lower bridge arm. The voltages of the parasitic capacitors C3 and C4 of the third switch Q3 and the fourth switch Q4 are zero, and the voltage of the parasitic capacitor C6 of the second diode D2 is Vbus. Then the inductor current gradually decreases to zero. This process is called stage I, as stage I shown in FIG 3, after all the switches are turned off, the inductor current 303 continues to decrease until it reaches zero.

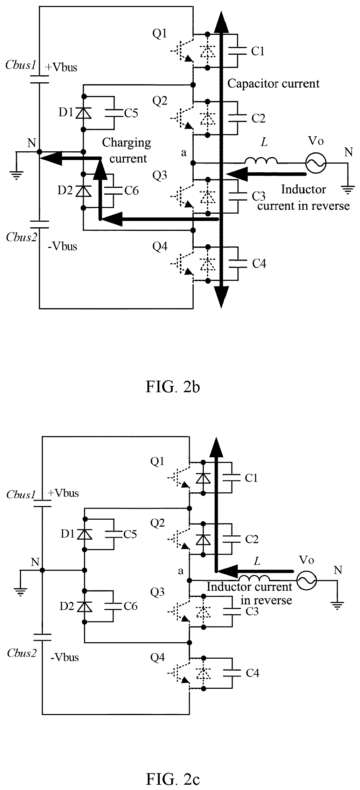

As shown in FIG 2b, when the inductor current decreases to zero, because the output voltage at point a of the bridge arm is -Vbus, and Vo is greater than zero, the inductor L bears a reverse voltage, causing the inductor current to increase in the reverse direction, and the lower bridge arm no longer has current flowing through the anti-parallel diode. At this time, the inductor current discharges the parasitic capacitors C1 and C2 of the first switch Q1 and the second switch Q2 of the upper bridge arm, and the voltages of C1 and C2 start to decrease from Vbus. At the same time, the inductor current charges the parasitic capacitors C3 and C4 of the third switch Q3 and the fourth switch Q4, and the voltages of C3 and C4 increase from zero relative to the potential -Vbus at the second terminal of the second capacitor Cbus2. At the same time, the current will flow through the parasitic capacitor C6 of the second diode D2, and the voltage of C6 starts to decrease from Vbus (in other words, the potential of the anode of the second diode D2 increases from zero relative to the voltage of -Vbus). Since the current charging C4 and C6 will flow through C3, which is equivalent to that the capacitor C4 is connected in parallel with C6, and then in series with the capacitor C3, assuming that the parameters of C3 and C4 are the same, the voltage at C3 will be higher than C4 at this time, resulting in uneven voltage distribution between the inner switches and the outer switches, this stage is called stage II. As shown in FIG 3, in the stage II, the voltage 301 of the switch Q3 and the voltage 302 of the switch Q4 increase rapidly due to reverse charging, the voltage 301 of C3 will eventually reach about 400V, and the voltage 302 of C4 will eventually reach about 300V, it can be seen that the maximum voltages of the two have an extremely uneven distribution. It should be noted that FIG 3 shows the voltages measured under certain actual conditions. The purpose is to illustrate the problem of uneven distribution, not to limit the actual voltage values of Q3 and Q4.

Further, as shown in FIG 2c, when the capacitors C1 and C2 are reversely charged and the voltage drops to zero, the anti-parallel diodes of the first switch Q1 and the second switch Q2 are in on state, and the inductor current is freewheeling through the upper bridge arm. This stage is called stage III. As shown in FIG 3, during the whole process of stage III, the voltage 301 of the switch Q3 and the voltage 302 of the switch Q4 are basically maintained at the highest level, which is also the worst period of uneven distribution of the switches. The voltage 301 of the inner switch Q3 is significantly higher than the voltage 302 of the outer switch Q4. In addition, the larger the capacitance C6 of the clamped diode D2, or the higher the bus voltage, the greater the difference between the inner switch and the outer switch, and the higher the risk of overvoltage damage to the inner switch.

In the existing treatment method, the inner switch with a higher withstand voltage is generally selected, so that the inner switch will not be damaged due to uneven voltage distribution. However, the cost of the inner switch selected in this way is higher, that is, the cost-effectiveness is not as good as the inner switch that has the low withstand voltage, which makes the cost of the inverter higher, and this treatment method does not solve the problem of uneven voltage distribution from the root.

The present application, after in-depth analysis of the above-mentioned uneven voltage distribution problem of the inner and outer switches at stage III, creatively proposes to change the direction of the freewheeling current by changing the driving timing of the switch, so as to achieve the purpose of even voltage distribution between the inner and outer switches without changing the original circuit structure or setting the inner switch with a higher withstand voltage. The description is given below in conjunction with specific embodiments.

FIG 4 is a schematic diagram of a system structure of a neutral-point-clamped three-level circuit according to an embodiment of the present application. As shown in FIG 4, it includes a controller 41 and a neutral-point-clamped three-level circuit 42.

The neutral-point-clamped three-level circuit 42 is the same as that shown in FIG 1, and specifically includes: a first switch Q1, a second switch Q2, a third switch Q3 and a fourth switch Q4 connected in series; a first capacitor Cbus1 and a second capacitor Cbus2, where a first terminal of the first switch Q1 is connected to a first terminal of the first capacitor Cbus1, a second terminal of the fourth switch Q4 is connected to a second terminal of the second capacitor Cbus2; a first diode D1 and a second diode D2, where a cathode of the first diode D1 is connected to a middle-point between the first switch Q1 and the second switch Q2, and an anode of the second diode D2 is connected to a middle-point between the third switch Q3 and the fourth switch Q4, and an anode of the first diode D1 and a cathode of the second diode D2 are connected to a middle-point between the first capacitor Cbus1 and the second capacitor Cbus2; an inductor L through which a middle-point between the second switch Q2 and the third switch Q3 is connected to a power grid; a controller 41 which is connected to the first switch Q1, the second switch Q2, the third switch Q3 and the fourth switch Q4.

In some embodiments, when a fault occurs, the controller 41 estimates a polarity of a modulation wave; and when the controller 41 determines that the modulation wave is in a positive half wave and a trigger signal is received, it controls the first switch Q1, the third switch Q3, and the fourth switch Q4 to be in off state, and controls the second switch Q2 to maintain on state, wherein the controller controls the second switch Q2 to be turned off after a preset duration and an inductor current is less than or equal to a preset current value; when the controller 41 determines that the modulation wave is in a negative half wave and a trigger signal is received, it controls the first switch Q1, the second switch Q2, and the fourth switch Q4 to be in off state, and controls the third switch Q3 to maintain on state, wherein the controller 41 controls the third switch Q3 to be turned off after a preset duration and an inductor current is less than or equal to a preset current value.

Wherein, the number of the neutral-point-clamped three-level circuit 42 may also be multiple. For example, three bridge arms correspond to three-phase alternating current. Those skilled in the art can select the number of bridge arm structures 42 according to actual conditions, and the number of bridge arms 42 is not limited in the present application.

In some embodiments, the first switch Q1, the second switch Q2, the third switch Q3, and the fourth switch Q4 may be, for example, MOSFET transistors, IGBT transistors, SiC transistors, GaN transistors, or other fully-controlled switches. Or multiple power switches are connected in parallel to form an equivalent switch. For example, Q1 is formed by two MOSFET transistors in parallel. The parallel switches can reduce the current flowing through a single switch, so that a switch with a smaller withstand current can be selected, and the cost can be reduced.

In an embodiment, the controller can be a digital controller or an analog controller, and the controller blocks a driving signal of each switch by means of hardware or software. For example, the controller is a DSP (Digital Signal Processing), and the DSP blocks the driving signal of each switch through a trip zone (a programmable fault control zone).

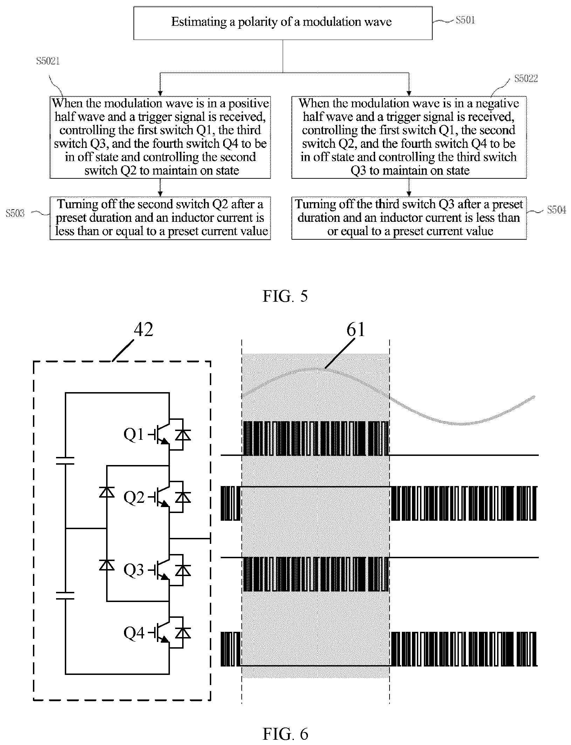

FIG 5 is a schematic flowchart of a control method of a neutral-point-clamped three-level circuit according to an embodiment of the present application. The controller 41 can execute the control method of the neutral-point-clamped three-level circuit shown in FIG 5. As shown in FIG 5, the method includes specific steps of

S501: estimating a polarity of a modulation wave.

In this step, the controller detects whether the modulation wave is in a positive half cycle or a negative half cycle, because in the control strategy of the neutral-point-clamped three-level inverter, for example, in the SVPWM (Space Vector Pulse Width Modulation) control algorithm, it is necessary to adopt different control sequence states for the four switches Q1-Q4 shown in FIG 4 to obtain an AC output.

FIG 6 is a schematic diagram of driving waveforms of a neutral-point-clamped three-level inverter during a normal operation according to an embodiment of the present application. As shown in FIG 6, the right side shows PWM waves corresponding to the four switches, the gray background part shows operating states of the four switches when the modulation wave 61 is in the positive half cycle, that is, during this period, the first switch Q1 and the third switch Q3 are complementarily turned on, the second switch Q2 is constantly in on state, and the fourth switch Q4 is constantly in off state; correspondingly, when the modulation wave 61 is in the negative half cycle, Q2 and Q4 are complementarily turned on, and Q3 is constantly in on state, Q1 is constantly in off state.

Therefore, when it is determined that a fault occurs, the controller needs to firstly identify the polarity of the modulation wave 61 to determine a next control object.

S5021, when the modulation wave is in a positive half wave and a trigger signal is received, controlling the first switch Q1, the third switch Q3, and the fourth switch Q4 to be in off state and controlling the second switch Q2 to maintain on state.

In this step, when the controller receives the trigger signal, and if the controller detects that the modulation wave is in the positive half wave, that is, when the modulation wave is positive, the switches Q1, Q3 are turned off immediately, that is, the switches Q1, Q3 and Q4 are in off state, but Q2 maintains on state.

Wherein, the trigger signal may include a current-limiting CBC (Cycle-by-Cycle current-limiting) signal or other fault protection signals. In some embodiments, when the controller receives a fault protection signal, the inverter will no longer be immediately restored to a normal operating state after the control method of the embodiment of the present application is executed; but when the controller receives the current-limiting CBC signal, the inverter may be restored to a normal operating state upon a drop of an output current to a preset current-limiting value when the control method of the embodiment of the present application is executed.

Specifically, taking the controller being a DSP as an example, the DSP controller generates a modulation wave Vr which is modulated by PWM to generate driving signals for the switches, and a drive blocking of each switch or the on and off of each switch is realized by configuring a DSP trip zone (a programmable fault control zone). After the DSP controller receives the trigger signal, that is, the fault protection signal or the current-limiting CBC signal, the DSP controller configures a trip zone (a programmable fault control zone) to turn off Q1, Q3, and Q4 and maintain on state of Q2. Different inverters may have slightly different modulation wave signals, but they are all within the protection scope of the present invention. The modulation wave in the present invention is only an example, and the protection scope of the present invention is not limited thereto. Modifications or replacements readily made by any person skilled in the art within the technical scope disclosed in the present invention shall fall into the protection scope of the present invention. For example, since the phases of the modulation wave and the grid voltage are basically the same, in some embodiments, the control can even be performed by determining whether the grid voltage is positive or negative.

S503: turning off the second switch Q2 after a preset duration and an inductor current is less than or equal to a preset current value.

In this step, the controller turns off the second switch Q2 after a preset duration has passed. At this time, the current of the inductor L is less than or equal to a preset current value, wherein the preset current value is set to be zero.

In a possible design, the controller can calculate and set the preset duration according to the grid voltage $V_o$ and the inductance value L.

Optionally, the preset duration can be calculated according to the differential relationship between the voltage and the current of the inductor L. The voltage $V_L$ of the inductor L can be expressed by formula (1), which is as follows:

$$V_L = L\frac{di}{dt} \qquad (1)$$

where L is the inductance value of the inductor.

After the controller receives the trigger signal to turn off the switches, the second switch Q2 remains on until the inductor current reduces to the preset current value, for example, the preset current value is zero. Since the second switch Q2 maintains a conducting state, the inductor current freewheeling loop passes through Q2, point a connecting the inductor and the bridge arm has a level of 0, that is, the potential at the point N, and the output voltage is $V_o$, for example, the grid voltage can be expressed by formula (2) which is as follows:

$$V_o = V_{ac}\sin\omega t \qquad (2)$$

where $V_{ac}$ is the maximum value of the grid voltage.

Assuming that the inductance value L is constant, a short-term change of the power grid can be ignored, that is, the voltage is considered to be constant. Then, by combining formula (1) and formula (2), the preset duration $T_{delay}$ can be obtained, which can be expressed by formula (3) as follows:

$$T_{delay} = L * \Delta I / V_o \qquad (3)$$

where $T_{delay}$ is the preset duration; $\Delta I$ is a difference between an instantaneous current at a fault time and the preset current value; $V_o$ is the instantaneous output voltage; $L$ is the inductance value.

Specifically, for example, after the DSP controller uses formula (3) to calculate the preset duration, a timer starts, and after the timer reaches the preset duration, the second switch Q2 is turned off by setting a trip zone (a programmable fault control zone).

Further optionally, the preset duration can also be set to a fixed value. The maximum value can be calculated by actually testing the time for the inductor current to drop to the preset current value under each working condition, and can be used as the preset duration. In some embodiments, for example, the switching period of the circuit is set to 50 us, and if the inductor current can drop to the preset current value within a switching period of 50 us, the preset duration can be set to 50 us. In this way, the calculation time and resources of the controller can be saved, and the voltage balance control of the inner and outer switches can be realized quickly and efficiently. In other embodiments, the preset duration can be set to one switching period or longer.

S5022, when the modulation wave is in a negative half wave and a trigger signal is received, controlling the first switch Q1, the second switch Q2, and the fourth switch Q4 to be in off state and controlling the third switch Q3 to maintain on state.

S504: turning off the third switch Q3 after a preset duration and an inductor current is less than or equal to a preset current value.

S5022-S504 are the control method when the modulation wave is in the negative half wave, which correspond to S5021-S503; the principle and noun explanation thereof are similar to S5021-S503, and details will not be repeated here.

This embodiment provides a neutral-point-clamped three-level circuit and a control method. By estimating a polarity of a modulation wave, when the modulation wave is in a positive half wave and a trigger signal is received, the first switch, the third switch and the fourth switch are controlled to be in off state, and the second switch is controlled to maintain on state, wherein the second switch is turned off after a preset duration and an inductor current is less than or equal to a preset current value; when the modulation wave is in a negative half wave and a trigger signal is received, the first switch, the second switch, and the fourth switch are controlled to be in off state, and the third switch is controlled to maintain on state, where the third switch is turned off after a preset duration and an inductor current is less than or equal to a preset current value. The method solves the problem of uneven maximum voltage distribution between the inner and outer switches after the neutral-point-clamped three-level inverter is shut down, so that the inner and outer switches with lower withstand voltages can be chosen, thereby achieving technical effects of cost reduction and cost-effectiveness improvement.

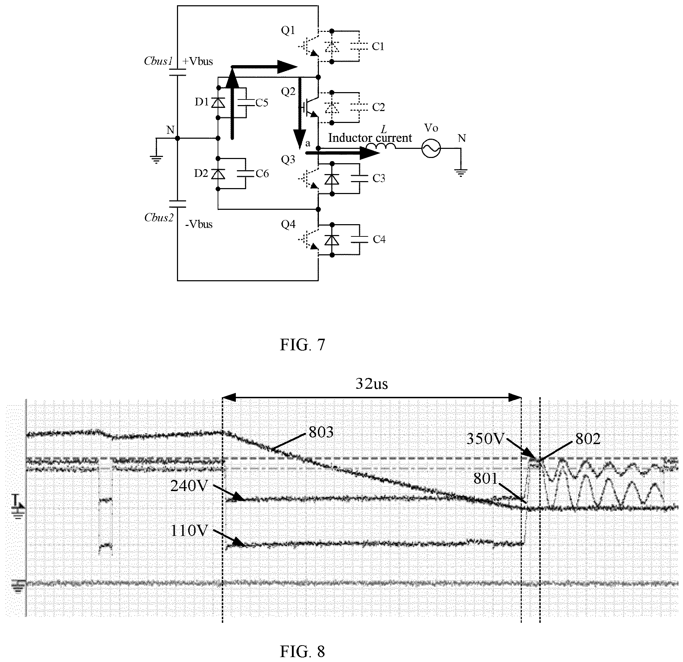

In order to explain the principle that, according to the control method of the present application, the voltage is equally divided between the inner and outer switches in the freewheeling oscillation phase after the neutral-point-clamped three-level circuit 42 is shut down, the following describes in detail with reference to FIG 7 and FIG 8.

FIG 7 is a schematic diagram of current freewheeling when the modulation wave is in a positive half wave after the neutral-point-clamped three-level circuit is shut down according to an embodiment of the present application. As shown in FIG 7, after using the control method shown in FIG 5, the inductor current has changed in direction. Specifically, when the modulation wave is greater than zero, and the neutral-point-clamped three-level circuit works normally, according to the driving signals of the neutral-point-clamped circuit shown in FIG 6, the switches Q1 and Q3 are turned on complementary, Q2 is in on state, and Q4 is in off state. In the control method shown in FIG 5, if the modulation wave is greater than zero, when a trigger signal is received, the PWM signals of the switches Q1 and Q3 are configured to be turned off, and no treatment to Q2 and Q4 because Q4 was in off state originally and Q2 was in on state originally. Therefore, when a fault occurs, that is, when the controller receives a trigger signal, for the two switches of the upper bridge arm, the outer switch Q1 is immediately turned off, and Q2 is maintained to be on. For the two switches of the lower bridge arm, the inner switch Q3 is turned off immediately, while the outer switch Q4 was originally in off state. Therefore, there will not be a state where the inner switch is off and the outer switch is on, that is, the switch at the moment of the fault will not have a situation that bears the entire bus voltage due to timing problems. As shown in FIG 7, after a fault or current limit occurs, that is, after the controller receives a trigger signal, only one inner switch is in on state, that is, Q2 maintains on state, and the other switches are in off state. In the embodiment of the present application, the inductor current is no longer freewheeling through the lower bridge arm, but freewheeling through the switch Q2. Then, the potential at point a of the bridge arm is clamped to zero instead of -Vbus in FIG 2b. In FIG 7, the capacitors C6 and C3 are connected in parallel to divide the voltage with C4, that is, Vc6 = Vc3, Vc3 + Vc4 = Vbus. Generally speaking, the capacitance of C6//C3 is greater than that of C4, so the voltage of C4 is greater than that of C3. When the freewheeling current gradually decreases to zero after a period of time, and C3, C4 and C6 are charged in reverse, since the initial voltage of C4 is greater than C3, the voltage of C4 will firstly reach Vbus, and then the clamped diode D2 will be conducting, the voltage of C4 is clamped to Vbus, when the current is freewheeling through the upper bridge arm, the voltages at C3 and C4 are equal.

FIG 8 is a diagram of voltage and current detection at various stages of freewheeling oscillation after the neutral-point-clamped three-level circuit is shut down according to an embodiment of the present application. As shown in FIG 8, the process that the inductor current 803 drops to 0 lasts approximately 32 microseconds. During this process, the switch Q2 maintains on state. However, in the prior art, it is guaranteed that after the outer switch is turned off, Q2 is generally turned off after only a delay of a few microseconds. Since in this case, Q2 maintains on state, C6 and C3 in FIG. 7 are connected in parallel, and then connected in series with C4 for voltage division, so that when the freewheeling starts, it can be seen from the circuit analysis of FIG 7 that the voltage 802 of C4 and the voltage 801 of C3 are not zero at the start time, but there is a certain difference therebetween. As shown in FIG 8, the initial value of the voltage 802 of C4 is about 240V, and the initial value of the voltage 801 of C3 is about 110V. However, due to the function of the clamped diode, the voltage 801 of C3 and the voltage 802 of C4 are finally stabilized at about 350V, which greatly reduces the problem of uneven distribution between the two compared with the prior art. In this way, both the inner and outer switches with lower withstand voltages are used, thereby reducing the cost of the neutral-point-clamped three-level circuit and improving the cost-effectiveness of the inner switches. In addition, the control method of the present application does not change the circuit topology, and it only needs to add the control method described in the present application to the control logic of the controller.

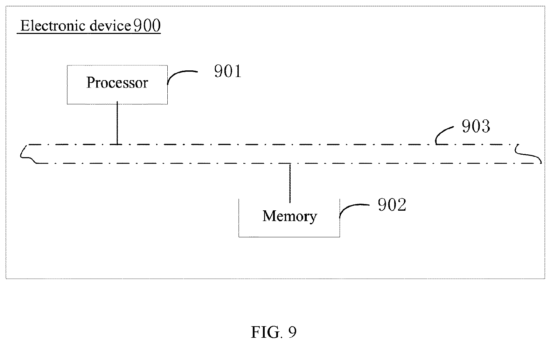

FIG 9 is a schematic structural diagram of an electronic device according to the present application. As shown in FIG 9, the electronic device 900 may include:

at least one processor 901 and a memory 902. FIG 9 shows an electronic device with one processor as an example.

The memory 902 is configured to store a program. Specifically, the program may include program codes, and the program codes include computer operation instructions.

The memory 902 may include a high-speed RAM memory, and may also include a non-volatile memory, for example, at least one disk memory.

The processor 901 is configured to execute computer-executable instructions stored in the memory 902 to implement the method described in the foregoing method embodiments.

The processor 901 may be a central processing unit (CPU), or an application specific integrated circuit (ASIC), or configured to implement one or more integrated circuits of the embodiments of the present application.

Optionally, the memory 902 may be independent or integrated with the processor 901. When the memory 902 is a device independent of the processor 901, the electronic device 900 may further include: a bus 903 for connecting the processor 901 and the memory 902. The bus may be an industry standard architecture (ISA) bus, a peripheral component interconnect (PCI) bus, or an extended industry standard architecture (EISA) bus. The bus can be divided into an address bus, a data bus, a control bus, etc., but it does not mean that there is only one bus or one type of bus.

Optionally, in terms of specific implementation, if the memory 902 and the processor 901 are integrated on a single chip, the memory 902 and the processor 901 may complete communication through an inner interface.

The present application also provides a computer-readable storage medium. The computer-readable storage medium may include: an USB disk, a mobile hard disk, a read-only memory (ROM), a random access memory (RAM), a magnetic disk, an optical disk, or other media that can store program codes. Specifically, the computer-readable storage medium has stored therein program instructions for the method in the foregoing embodiments.

The scope of protection is defined by the appended claims.


**Claims**

1. A control method for shutting down a neutral-point-clamped three-level circuit, the neutral-point-clamped three-level circuit comprising a first switch, a second switch, a third switch and a fourth switch connected in series, wherein a middle-point between the second switch and the third switch is connected to an output through an inductor; **characterized in that** the method comprises:

   estimating (S501) a polarity of a modulation wave, the modulation wave being the signal which is modulated by PWM to generate driving signals for the switches;
   when the modulation wave is in a positive half wave and a trigger signal is received, controlling (S5021) the first switch, the third switch, and the fourth switch to be in off state and controlling the second switch to maintain on state, wherein the second switch is turned off after a preset duration and an inductor current is equal to a preset current value, wherein the preset current value is set to be zero;
   when the modulation wave is in a negative half wave and a trigger signal is received, controlling (S5022) the first switch, the second switch, and the fourth switch to be in off state and controlling the third switch to maintain on state, wherein the third switch is turned off after a preset duration and the inductor current is equal to the preset current value.

2. The control method according to claim 1, wherein the preset duration is calculated and set according to an output voltage and an inductance value.

3. The control method according to claim 2, wherein a calculation formula for the preset duration is:

$$T_{\text{delay}} = L * \Delta I / V_o$$

   $T_{\text{delay}}$ is the preset duration; $\Delta I$ is a difference between an instantaneous current at a fault time and the preset current value; $V_o$ is an instantaneous output voltage; $L$ is the inductance value.

4. The control method according to claim 1, wherein the preset duration is set to be at least one switching period.

5. The control method according to claim 1, wherein the trigger signal is a current-limiting cycle-by-cycle, CBC, signal or a fault protection signal.

6. The control method according to claim 1, further comprising: blocking a driving signal of each switch by means of hardware or software.

7. The control method according to claim 6, wherein the first switch, the second switch, the third switch, and the fourth switch are fully-controlled switches, and the fully-controlled switches comprise MOSFET, IGBT, and SiC transistors and GaN transistors.

8. A neutral-point-clamped three-level circuit comprising:

   a first switch (Q1), a second switch (Q2), a third switch (Q3), and a fourth switch (Q4) connected in series;
   a first capacitor (Cbus1) and a second capacitor (Cbus2), wherein a first terminal of the first switch (Q1) is connected to a first terminal of the first capacitor (Cbus1), and a second terminal of the fourth switch (Q4) is connected to a second terminal of the second capacitor (Cbus2);
   a first diode (D1) and a second diode (D2), wherein a cathode of the first diode (D1) is connected to a middle-point between the first switch (Q1) and the second switch (Q2), and an anode of the second diode (D2) is connected to a middle-point between the third switch (Q3) and the fourth switch (Q4), and an anode of the first diode (D1) and a cathode of the second diode (D2) are connected to a middle-point between the first capacitor (Cbus1) and the second capacitor (Cbus2);
   an inductor (L) through which a middle-point between the second switch (Q2) and the third switch (Q3) is connected to an output;
   a controller which is electrically connected to the first switch (Q1), the second switch (Q2), the third switch (Q3) and the fourth switch (Q4); **characterized by** when shutting down the neutral-point-clamped three-level circuit, the controller is configured to estimate a polarity of a modulation wave, the modulation wave being the signal which is modulated by PWM to generate driving signals for the switches; and
   when the modulation wave is in a positive half wave and a trigger signal is received, the controller is configured to control the first switch (Q1), the third switch (Q3), and the fourth switch (Q4) to be in off state, and is configured to control the second switch (Q2) to maintain on state, wherein the controller is configured to control the second switch (Q2) to be turned off after a preset duration and an inductor current is equal to a preset current value, wherein the preset current value is set to be zero;
   when the modulation wave is in a negative half wave and a trigger signal is received, the controller is configured to control the first switch (Q1), the second switch (Q2), and the fourth switch (Q4) to be in off state, and is configured to control the third switch (Q3) to maintain on state, wherein the controller is configured to control the third switch (Q3) to be turned off after a preset duration and the inductor current is equal to the preset current value.

9. The circuit according to claim 8, wherein the controller is configured to calculate and to set the preset duration according to an output voltage and an inductance value.

10. The circuit according to claim 9, wherein a calculation formula for the preset duration is:

$$T_{delay} = L * \Delta I / V_o$$

$T_{delay}$ is the preset duration; $\Delta I$ is a difference between an instantaneous current at a fault time and the preset current value; $V_o$ is an instantaneous output voltage; $L$ is the inductance value.

11. The circuit according to claim 8, wherein the controller is configured to set the preset duration to be at least one switching period.

12. The circuit according to claim 8, wherein the trigger signal is a current-limiting cycle-by-cycle, CBC, signal or a fault protection signal.

13. The circuit according to claim 8, wherein the controller is a digital controller or an analog controller, and the controller is configured to block a driving signal of each switch by means of hardware or software.


**Patentansprüche**

1. Steuerverfahren zum Abschalten einer neutralpunktgeklemmten Dreipunktschaltung, wobei die neutralpunktgeklemmte Dreipunktschaltung einen ersten Schalter, einen zweiten Schalter, einen dritten Schalter und einen vierten Schalter umfasst, die in Reihe geschaltet sind, wobei ein Mittelpunkt zwischen dem zweiten Schalter und dem dritten Schalter über eine Induktivität mit einem Ausgang verbunden ist; **dadurch gekennzeichnet, dass** das Verfahren umfasst:

Schätzung (S501) einer Polarität einer Modulationswelle, wobei die Modulationswelle das Signal ist, das durch PWM moduliert wird, um Treibersignale für die Schalter zu erzeugen;

wenn sich die Modulationswelle in einer positiven Halbwelle befindet und ein Triggersignal empfangen wird, Steuern (S5021) des ersten Schalters, des dritten Schalters und des vierten Schalters, so dass sie sich im Aus-Zustand befinden, und Steuern des zweiten Schalters, so dass er den Ein-Zustand beibehält, wobei der zweite Schalter nach einer voreingestellten Dauer ausgeschaltet wird und ein Induktorstrom gleich einem voreingestellten Stromwert ist, wobei der voreingestellte Stromwert auf Null gesetzt ist;

wenn sich die Modulationswelle in einer negativen Halbwelle befindet und ein Triggersignal empfangen wird, Steuern (S5022) des ersten Schalters, des zweiten Schalters und des vierten Schalters, so dass sie sich im Aus-Zustand befinden, und Steuern des dritten Schalters, so dass er den Ein-Zustand beibehält, wobei der dritte Schalter nach einer voreingestellten Dauer ausgeschaltet wird und der Induktorstrom gleich dem voreingestellten Stromwert ist.

2. Steuerungsverfahren nach Anspruch 1, wobei die voreingestellte Dauer in Abhängigkeit von einer Ausgangsspannung und einem Induktivitätswert berechnet und eingestellt wird.

3. Steuerungsverfahren nach Anspruch 2, wobei eine Berechnungsformel für die voreingestellte Dauer lautet:

$$T_{\text{delay}} = L * \Delta I / V_o$$

$T_{\text{delay}}$ ist die voreingestellte Dauer; $\Delta I$ ist die Differenz zwischen dem momentanen Strom zum Fehlerzeitpunkt und dem voreingestellten Stromwert; $V_o$ ist die momentane Ausgangsspannung; $L$ ist der Induktivitätswert.

4. Steuerungsverfahren nach Anspruch 1, wobei die voreingestellte Dauer auf mindestens eine Schaltperiode eingestellt ist.

5. Steuerungsverfahren nach Anspruch 1, wobei das Triggersignal ein strombegrenzendes zyklusweises Signal (CBC-Signal) oder ein Fehlerschutzsignal ist.

6. Steuerungsverfahren nach Anspruch 1, das ferner Folgendes umfasst: Blockieren eines Treibersignals jedes Schalters mittels Hardware oder Software.

7. Steuerungsverfahren nach Anspruch 6, wobei der erste Schalter, der zweite Schalter, der dritte Schalter und der vierte Schalter vollgesteuerte Schalter sind und die vollgesteuerten Schalter MOSFET, IGBT, SiC-Transistoren und GaN-Transistoren umfassen.

8. Neutralpunktgeklemmte Dreipunktschaltung, umfassend:

einen ersten Schalter (Q1), einen zweiten Schalter (Q2), einen dritten Schalter (Q3) und einen vierten Schalter (Q4), die in Reihe geschaltet sind;

einen ersten Kondensator (Cbus1) und einen zweiten Kondensator (Cbus2), wobei ein erster Anschluss des ersten Schalters (Q1) mit einem ersten Anschluss des ersten Kondensators (Cbus1) verbunden ist, und ein zweiter Anschluss des vierten Schalters (Q4) mit einem zweiten Anschluss des zweiten Kondensators (Cbus2) verbunden ist;

eine erste Diode (D1) und eine zweite Diode (D2), wobei eine Kathode der ersten Diode (D1) mit einem Mittelpunkt zwischen dem ersten Schalter (Q1) und dem zweiten Schalter (Q2) verbunden ist, und eine Anode der zweiten Diode (D2) mit einem Mittelpunkt zwischen dem dritten Schalter (Q3) und dem vierten Schalter (Q4) verbunden ist, und eine Anode der ersten Diode (D1) und eine Kathode der zweiten Diode (D2) mit einem Mittelpunkt zwischen dem ersten Kondensator (Cbus1) und dem zweiten Kondensator (Cbus2) verbunden sind;

eine Induktionsspule (L), über die ein Mittelpunkt zwischen dem zweiten Schalter (Q2) und dem dritten Schalter (Q3) mit einem Ausgang verbunden ist;

eine Steuerung, das elektrisch mit dem ersten Schalter (Q1), dem zweiten Schalter (Q2), dem dritten Schalter (Q3) und dem vierten Schalter (Q4) verbunden ist; **dadurch gekennzeichnet, dass** beim Abschalten der neutralpunktgeklemmten Dreipunktschaltung

die Steuerung so konfiguriert ist, dass sie eine Polarität einer Modulationswelle schätzt, wobei die Modulationswelle das Signal ist, das durch PWM moduliert wird, um Treibersignale für die Schalter zu erzeugen; und wenn sich die Modulationswelle in einer positiven Halbwelle befindet und ein Triggersignal empfangen wird, die Steuerung so konfiguriert ist, dass sie den ersten Schalter (Q1), den dritten Schalter (Q3) und den vierten Schalter (Q4) so steuert, dass sie sich im Aus-Zustand befinden, und so konfiguriert ist, dass sie den zweiten Schalter (Q2) so steuert, dass er den Ein-Zustand beibehält, wobei die Steuerung so konfiguriert ist, dass sie den zweiten Schalter (Q2) so steuert, dass er nach einer voreingestellten Dauer ausgeschaltet wird und ein Induktorstrom gleich einem voreingestellten Stromwert ist, wobei der voreingestellte Stromwert auf Null gesetzt ist;

wenn sich die Modulationswelle in einer negativen Halbwelle befindet und ein Triggersignal empfangen wird, die Steuerung so konfiguriert ist, dass sie den ersten Schalter (Q1), den zweiten Schalter (Q2) und den vierten Schalter (Q4) so steuert, dass sie sich im Aus-Zustand befinden, und so konfiguriert ist, dass sie den dritten Schalter (Q3) so steuert, dass er den Ein-Zustand beibehält, wobei die Steuerung so konfiguriert ist, dass sie den dritten Schalter (Q3) so steuert, dass er nach einer voreingestellten Dauer ausgeschaltet wird und ein Induktorstrom gleich dem voreingestellten Stromwert ist.

9. Schaltung nach Anspruch 8, wobei die Steuerung so konfiguriert ist, dass sie die voreingestellte Dauer in Abhängigkeit von einer Ausgangsspannung und einem Induktivitätswert berechnet und einstellt.

10. Die Schaltung nach Anspruch 9, wobei eine Berechnungsformel für die voreingestellte Dauer lautet:

$$T = L * \varDelta I / V_{delayo}$$

$T_{delay}$ ist die voreingestellte Dauer; $\varDelta I$ ist die Differenz zwischen dem momentanen Strom zum Fehlerzeitpunkt und dem voreingestellten Stromwert; $V_o$ ist die momentane Ausgangsspannung; $L$ ist der Induktivitätswert.

11. Schaltung nach Anspruch 8, wobei die Steuerung so konfiguriert ist, dass sie die voreingestellte Dauer auf mindestens eine Schaltperiode einstellt.

12. Schaltung nach Anspruch 8, wobei das Triggersignal ein strombegrenzendes zyklusweises Signal (CBC-Signal) oder ein Fehlerschutzsignal ist.

13. Schaltung nach Anspruch 8, wobei die Steuerung eine digitale Steuerung oder eine analoge Steuerung ist und die Steuerung so konfiguriert ist, dass sie ein Ansteuersignal jedes Schalters mittels Hardware oder Software blockiert.

**Revendications**

1. Un procédé de commande pour éteindre un circuit à trois niveaux fixé au point neutre, le circuit à trois niveaux fixé au point neutre comprenant un premier commutateur, un second commutateur, un troisième commutateur et un quatrième commutateur connectés en série, dans lequel un point médian entre le second commutateur et le troisième commutateur est connecté à une sortie via une inductance ; **caractérisé en ce que** le procédé comporte :

estimer (S501) une polarité d'une onde de modulation, l'onde de modulation étant le signal qui est modulé par PWM pour générer des signaux de commande pour les commutateurs ;
lorsque l'onde de modulation est dans une demi-onde positive et qu'un signal de déclenchement est reçu, commander (S5021) le premier commutateur, le troisième commutateur et le quatrième commutateur pour qu'ils soient dans l'état désactivé et commander le second commutateur dans un état passant, dans lequel le second commutateur est désactivé après une durée prédéfinie et lorsqu'un courant d'inductance est inférieur ou égal à une valeur de courant prédéfinie, dans lequel la valeur de courant prédéfinie est fixée à zéro ;
lorsque l'onde de modulation est dans une demi-onde négative et qu'un signal de déclenchement est reçu, commander (S5022) le premier commutateur, le second commutateur et le quatrième commutateur pour qu'ils soient dans un état bloqué et commander le troisième commutateur pour maintenir l'état passant, dans lequel le troisième commutateur est éteint après une durée prédéfinie et lorsqu'un courant d'inductance est égal à la valeur de courant prédéfinie.

2. Le procédé de commande selon la revendication 1, dans lequel la durée prédéfinie est calculée et réglée en fonction d'une tension de sortie et d'une valeur d'inductance.

3. Le procédé de commande selon la revendication 2, dans lequel une formule de calcul pour la durée prédéfinie est :

$$T_{delay} = L * \Delta I / V_o$$

$T_{delay}$ est la durée prédéfinie ; $\Delta I$ est une différence entre un courant instantané à un moment de défaut et à la valeur de courant prédéfinie ; $V_o$ est une tension de sortie instantanée ; $L$ est la valeur de l'inductance.

4. Le procédé de commande selon la revendication 1, dans lequel la durée prédéfinie est fixée pour être au moins une période de commutation.

5. Le procédé de commande selon la revendication 1, dans lequel le signal de déclenchement est un signal de limitation de courant cycle par cycle, CBC, ou un signal de protection contre les défauts.

6. Le procédé de commande selon la revendication 1, comprenant en outre : le blocage d'un signal de commande de chaque commutateur au moyen d'un élément matériel ou d'un élément logiciel.

7. Le procédé de commande selon la revendication 6, dans lequel le premier commutateur, le second commutateur, le troisième commutateur et le quatrième commutateur sont des commutateurs entièrement commandés, et les commutateurs entièrement commandés comprennent des transistors MOSFET, IGBT et SiC et des transistors GaN.

8. Un circuit à trois niveaux fixé au point neutre, comprenant :

un premier commutateur (Q1), un second commutateur (Q2), un troisième commutateur (Q3) et un quatrième commutateur (Q4) connectés en série ;
un premier condensateur (Cbus1) et un second condensateur (Cbus2), dans lequel une première électrode du premier commutateur (Q1) est connectée à une première électrode du premier condensateur (Cbus1), et une seconde électrode du quatrième commutateur (Q4) est connectée à une seconde électrode du second condensateur (Cbus2) ;
une première diode (D1) et une seconde diode (D2), dans lesquelles une cathode de la première diode (D1) est connectée à un point médian entre le premier commutateur (Q1) et le second commutateur (Q2), et une anode de la seconde diode (D2) est connectée à un point médian entre le troisième commutateur (Q3) et le quatrième commutateur (Q4), et une anode de la première diode (D1) et une cathode de la seconde diode (D2) sont connectées à un point médian entre le premier condensateur (Cbus1) et le deuxième condensateur (Cbus2) ;
une inductance (L) à travers laquelle un point médian entre le second commutateur (Q2) et le troisième commutateur (Q3) est connecté à une sortie ;
un contrôleur qui est connecté électriquement au premier commutateur (Q1), au second commutateur (Q2), au troisième commutateur (Q3) et au quatrième commutateur (Q4) ; **caractérisé par le fait que**
lorsque l'on éteint le circuit à trois niveaux fixé à un point neutre, le contrôleur est configuré pour estimer une polarité d'une onde de modulation, l'onde de modulation étant le signal modulé par PWM pour générer des signaux de commandes pour les commutateurs ; et
lorsque l'onde de modulation est dans une demi-onde positive et qu'un signal de déclenchement est reçu, le contrôleur est configuré pour commander le premier commutateur (Q1), le troisième commutateur (Q3) et le quatrième commutateur (Q4) pour qu'ils soient dans un état éteint, et pour commander le second commutateur (Q2) dans un état passant, dans lequel le contrôleur est configuré pour commander la mise hors tension du second commutateur (Q2) après une durée prédéfinie et qu'un courant d'inductance est égal à une valeur de courant prédéfinie, dans lequel la valeur de courant prédéfinie est fixée à zero ;
lorsque l'onde de modulation est dans une demi-onde négative et qu'un signal de déclenchement est reçu, le contrôleur est configuré pour commander le premier commutateur (Q1), le second commutateur (Q2) et le quatrième commutateur (Q4) pour qu'ils soient éteints, et est configuré pour commander le troisième commutateur (Q3) dans un état passant, dans lequel le contrôleur est configuré pour commandert la mise hors tension du troisième commutateur (Q3) après une durée prédéfinie et après qu'un courant d'inductance est égal à la valeur de courant prédéfinie.

9. Le circuit selon la revendication 8, dans lequel le contrôleur est configuré pour calculer et pour fixer la durée prédéfinie en fonction d'une tension de sortie et d'une valeur d'inductance.

10. Le circuit selon la revendication 9, dans lequel une formule de calcul pour la durée prédéfinie est :

$$T_{delay} = L * \Delta I / V_o$$

$T_{delay}$ est la durée prédéfinie ; $\Delta I$ est une différence entre un courant instantané à un moment de défaut et à la valeur de courant prédéfinie ; $V_o$ est une tension de sortie instantanée ; $L$ est la valeur de l'inductance.

11. Le circuit selon la revendication 8, dans lequel le contrôleur est configuré pour fixer la durée prédéfinie pour qu'elle soit au moins une période de commutation.

12. Le circuit selon la revendication 8, dans lequel le signal de déclenchement est un signal de limitation de courant cycle par cycle, CBC, ou un signal de protection contre les défauts.

13. Le circuit selon la revendication 8, dans lequel le contrôleur est un contrôleur numérique ou un contrôleur analogique, et le contrôleur est configuré pour bloquer un signal de commande de chaque commutateur au moyen d'un élément matériel ou d'un élément logiciel.

FIG. 1

FIG. 2a

FIG. 2b

FIG. 2c

EP 3 958 452 B1

FIG. 3

FIG. 4

16

Estimating a polarity of a modulation wave ~S501

S5021

When the modulation wave is in a positive half wave and a trigger signal is received, controlling the first switch Q1, the third switch Q3, and the fourth switch Q4 to be in off state and controlling the second switch Q2 to maintain on state

S5022

When the modulation wave is in a negative half wave and a trigger signal is received, controlling the first switch Q1, the second switch Q2, and the fourth switch Q4 to be in off state and controlling the third switch Q3 to maintain on state

S503

Turning off the second switch Q2 after a preset duration and an inductor current is less than or equal to a preset current value

S504

Turning off the third switch Q3 after a preset duration and an inductor current is less than or equal to a preset current value

FIG. 5

42    61

Q1
Q2
Q3
Q4

FIG. 6

FIG. 7

FIG. 8

Electronic device 900

Processor — 901

— 903

Memory — 902

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104518697 B